# EUROPÄISCHE PATENTANMELDUNG

(11) **EP 0 812 672 A2**
(43) Veröffentlichungstag der Anmeldung: **17.12.1997**
(21) Anmeldenummer: 97106961.2
(22) Anmeldetag: 26.04.1997
(51) Int. Cl.: B29C 65/02, B65B 9/00

(54) **Schweissvorrichtung für bahnenweise vorgeschobene, aufeinanderliegende Folien**

(30) Priorität: 15.06.1996 DE 19623954
(71) Anmelder: BECK PACKAUTOMATEN GMBH & CO., 72636 Frickenhausen (DE)
(72) Erfinder: Gonser, Martin, 72636 Frickenhausen (DE); Maier, Siegfried, 72555 Metzingen-Neuhausen (DE)
(74) Vertreter: Hoeger, Stellrecht & Partner

(57) **Zusammenfassung**

Um eine Schweißvorrichtung für bahnenweise vorgeschobene, aufeinanderliegende Folien mit zwei in Vorschubrichtung umlaufenden, die Folienbahnen (28,30) über einen Gegenstempel (18) führenden Transportriemen, deren gegenseitiger Abstand quer zur Vorschubrichtung (32) verstellbar ist, und mit einem auf den Gegenstempel (18) aufsetzbaren und die darauf angeordneten Folienbahnen zwischen den beiden Transportriemen (28,30) mittels eines Heizelements miteinander verschweißenden Schweißstempel derart auszugestalten, daß sie eine größere Verstellbarkeit des Abstands der beiden Transportriemen aufweist und eine bessere Temperaturkontrolle des Heizelements ermöglicht, wird vorgeschlagen, daß am Gegenstempel eine einen Transportriemen aufnehmende, relativ zum Gegenstempel quer zur Vorschubrichtung verstellbare Riemendurchführung (23) angeordnet ist.

## Beschreibung

Die Erfindung betrifft eine Schweißvorrichtung für bahnenweise vorgeschobene, aufeinanderliegende Folien mit zwei in Vorschubrichtung umlaufenden, die Folienbahnen über einen Gegenstempel führenden Transportriemen, deren gegenseitiger Abstand quer zur Vorschubrichtung verstellbar ist, und mit einem auf den Gegenstempel aufsetzbaren und die darauf angeordneten Folienbahnen zwischen den beiden Transportriemen mittels eines Heizelementes miteinander verschweißenden Schweißstempel.

Derartige Schweißvorrichtungen kommen bei Verpackungsmaschinen zum Einsatz, um von Folien umhülltes Packgut in die Folien einzuschweißen. Hierzu wird üblicherweise das Packgut längs einer Fördervorrichtung vorgeschoben und von einer oder mehreren Folienbahnen schlauchförmig umgeben. Anschließend werden die schlauchförmigen Folien zwischen den Packgütern mittels eines quer zur Vorschubrichtung ausgerichteten Schweißstempels miteinander verschweißt. Eine derartige Verpackungsmaschine ist aus der deutschen Patentschrift DE 31 18 007 C2 bekannt.

Der Schweißstempel umfaßt üblicherweise ein Heizelement, beispielsweise einen Schweißdraht, und wird zum Verschweißen auf einen Gegenstempel aufgesetzt, über den die zu verschweißenden Folienbahnen geführt werden. Die Führung der Folienbahnen über den Gegenstempel erfolgt mittels in Vorschubrichtung umlaufender Transportriemen, so daß die aufeinanderliegenden Folien im Schweißbereich zum Erzielen einer sauberen Schweißnaht faltenfrei gehalten werden. Es muß allerdings sichergestellt werden, daß das Heizelement die Transportriemen nicht berührt, denn sonst kann es zu einer Beschädigung der Transportriemen durch das Heizelement des Schweißstempels kommen.

Um unterschiedlich breite Folienbahnen mit Hilfe der Transportriemen vorschieben und anschließend faltenfrei verschweißen zu können, ist es bekannt, die Transportriemen quer zur Vorschubrichtung der Folienbahnen verstellbar zu lagern, so daß ihr gegenseitiger Abstand der Breite der Folienbahnen angepaßt werden kann. Hierzu ist der Gegenstempel üblicherweise zweiteilig ausgestaltet, wobei die beiden Teile teleskopartig ineinandergreifen, und an jedem Teil des Gegenstempels ist eine Führung für einen Transportriemen angeordnet. Dies hat zur Folge, daß die Länge des Gegenstempels und damit der gegenseitige Abstand der beiden Transportriemenführungen verstellbar ist, indem die beiden Teile des Gegenstempels ineinandergeschoben oder bis auf eine Maximallänge auseinandergezogen werden. Die Verstellbarkeit des Abstands der beiden Transportriemen und damit die Verstellbarkeit der Schweißbreite ist allerdings bei einer derartigen Ausgestaltung aufgrund des teleskopartigen Ineinandergreifens der beiden Gegenstempelteile auf weniger als 50 % des maximalen Abstands beschränkt. Werden die beiden Teile des Gegenstempels ineinandergeschoben, so hat dies zur Folge, daß der Schweißstempel nicht mehr auf seiner gesamten Länge auf den Gegenstempel aufsetzbar ist, sondern daß ein seitlicher Bereich des Schweißstempels über den Gegenstempel übersteht. Damit ist der Nachteil verbunden, daß die Temperatur des Heizelements nur unzureichend kontrolliert werden kann, da das Heizelement nicht auf seiner ganzen Länge vom Gegenstempel abgedeckt wird.

Aufgabe der vorliegenden Erfindung ist es, eine Schweißvorrichtung der gattungsgemäßen Art so auszugestalten, daß sie eine größere Verstellbarkeit des Abstands der beiden Transportriemen aufweist und eine bessere Temperaturkontrolle des Heizelements ermöglicht.

Diese Aufgabe wird bei einer Schweißvorrichtung der eingangs genannten Art erfindungsgemäß dadurch gelöst, daß am Gegenstempel eine einen Transportriemen aufnehmende, relativ zum Gegenstempel quer zur Vorschubrichtung verstellbare Riemendurchführung angeordnet ist.

Mittels der Riemendurchführung läßt sich ein Transportriemen über den Gegenstempel führen, ohne daß der Transportriemen mit dem Heizelement in Kontakt kommt. Die Riemendurchführung ist quer zur Vorschubrichtung verstellbar, so daß der Abstand zwischen dem in der verstellbaren Riemendurchführung angeordneten Transportriemen und dem zweiten Transportriemen verstellt werden kann. Die Verstellbarkeit ist dabei nicht auf etwa 50 % des maximalen Abstandes der Transportriemen beschränkt, sondern mittels der erfindungsgemäßen Ausgestaltung können die beiden Transportriemen einander so angenähert werden, daß sie praktisch unmittelbar nebeneinander zur Anlage kommen.

Da die Riemendurchführung relativ zum Gegenstempel verstellbar ausgestaltet ist, ist es nicht erforderlich, zur Änderung des Abstands der Transportriemen die Länge des Gegenstempels zu verändern. Unabhängig von der Position der Riemendurchführung kann der Gegenstempel eine feste Ausdehnung aufweisen, die mindestens der Länge des Schweißstempels entspricht. Dies hat zur Folge, daß der Schweißstempel jederzeit auf seiner ganzen Länge auf den Gegenstempel aufsetzbar ist. Im aufgesetzten Zustand wird somit der Schweißstempel immer vollständig vom Gegenstempel abgedeckt, so daß er auf seiner gesamten Länge eine gleichmäßige Wärmeabfuhr aufweist. Dies ermöglicht eine bessere Temperaturkontrolle und hat eine deutlich erhöhte Standzeit des Heizelements, beispielsweise eines Heizdrahtes, zur Folge.

Bei einer vorteilhaften Ausgestaltung der erfindungsgemäßen Schweißvorrichtung ist vorgesehen, daß die Riemendurchführung an einem verschieblich am Gegenstempel gelagerten Schlitten angeordnet ist. Der Schlitten läßt sich in vorteilhafter Weise im wesentlichen über die gesamte Länge des Gegenstempels verschieben und nimmt die Riemendurchführung auf, so daß der Abstand der Transportriemen durch Verschieben des Schlittens auf einfache Weise verstellt werden kann.

Bei einer konstruktiv einfachen Ausgestaltung ist vorgesehen, daß der Schlitten in einer Längsnut des Gegenstempels geführt ist und auf seiner dem Schweißstempel zugewandten Oberseite eine Ausnehmung zur Durchführung eines Transportriemens aufweist.

Bei einer besonders bevorzugten Ausgestaltung ist vorgesehen, daß an der dem Schweißstempel zugewandten Oberseite des Gegenstempels eine quer zur Vorschubrichtung verschiebbare Auflage angeordnet ist mit einer Durchbrechung zur Aufnahme der Riemendurchführung. Wird der Schweißstempel auf den Gegenstempel aufgesetzt, so wird er auf seiner ganzen Länge von der Auflage abgedeckt, so daß eine gleichmäßige Wärmeabfuhr gewährleistet ist. Die Auflage ist quer zur Vorschubrichtung und damit längs des Gegenstempels verschiebbar und weist eine Durchbrechung zur Aufnahme der Riemendurchführung auf. Wird die Auflage verschoben, so ändert sich die Position der Durchbrechung und damit auch der Riemendurchführung, so daß diese praktisch über die gesamte Länge des Gegenstempels verstellbar ist.

Günstig ist es, wenn die Auflage als über drehbar am Gegenstempel gelagerte Umlenkrollen geführtes Auflageband ausgestaltet ist. Die Umlenkrollen können mit parallel zur Vorschubrichtung ausgerichteter Drehachse drehbar am Gegenstempel gehalten werden und bilden zwei Umlenkstellen, zwischen denen das Auflageband in Längsrichtung des Gegenstempels geführt ist. Hierbei verläuft das obere Trum des Auflagebandes an der Oberseite des Gegenstempels, während das untere Trum in vorteilhafter Weise entlang der dem Schweißstempel abgewandten Unterseite des Gegenstempels geführt werden kann.

Besonders günstig ist es, wenn die Auflage an der Oberseite des Gegenstempels in einer Führungsnut geführt ist. Dadurch wird sichergestellt, daß die Auflage lediglich in Längsrichtung des Gegenstempels, nicht aber quer dazu verschiebbar ist.

Zur Erzielung einer einwandfreien Schweißnaht ist es von Vorteil, wenn die Auflage ein Silikonband umfaßt. Aufgrund dessen Elastizität wird eine Beschädigung der Folienbahnen beim Aufsetzen des Schweißstempels auf den Gegenstempel vermieden.

Bei einer besonders bevorzugten Ausgestaltung der erfindungsgemäßen Schweißvorrichtung ist vorgesehen, daß das Silikonband am Schlitten einspannbar ist. Dadurch ist es möglich, das Silikonband auf einfache Weise am Gegenstempel zu befestigen, indem ein erster Endbereich des Silikonbands in den Schlitten eingespannt wird, das Silikonband anschließend um die Umlenkrollen herumgeführt und mit seinem gegenüberliegenden, zweiten Endbereich auf der dem ersten Endbereich gegenüberliegenden Seite des Schlittens ebenfalls in diesen eingespannt wird.

Zur Erzielung einer einwandfrei produzierbaren Schweißnaht ist es von Vorteil, wenn die Auflage ein Teflonband aufweist.

Günstig ist es, wenn das Silikon- und das Teflonband jeweils über separate Umlenkrollen geführt sind.

Vorzugsweise ist mindestens eine der Umlenkrollen des Teflonbands verstellbar am Gegenstempel gehalten. Dadurch ist es möglich, das Teflonband auf der Oberseite des Gegenstempels zu spannen, indem eine der beiden Umlenkrollen verstellt wird.

Die nachfolgende Beschreibung einer bevorzugten Ausführungsform der Erfindung dient im Zusammenhang mit der Zeichnung der näheren Erläuterung.

Es zeigen:

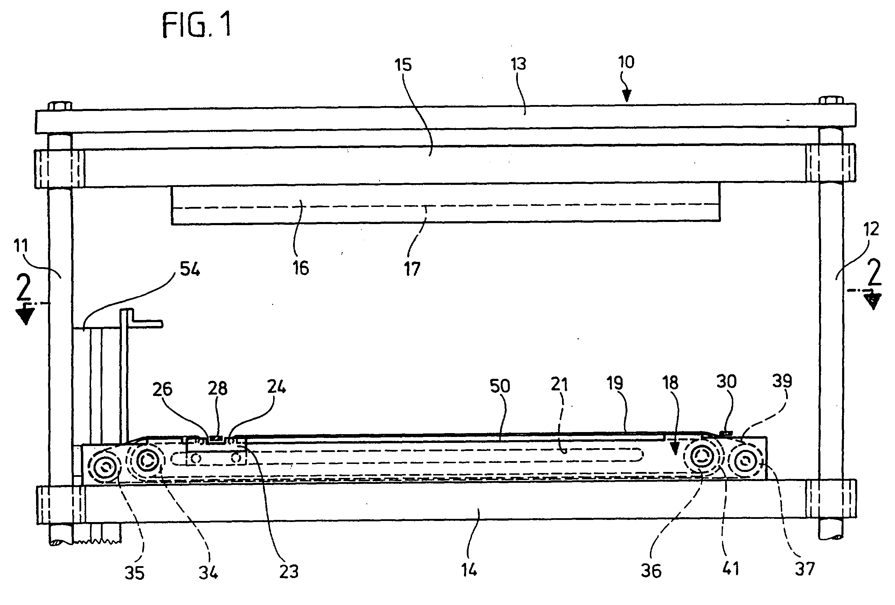

- Figur 1:: eine schematische Seitenansicht auf eine Schweißvorrichtung gemäß der Erfindung;
- Figur 2:: eine Schnittansicht längs der Linie 2-2 in Figur 1;

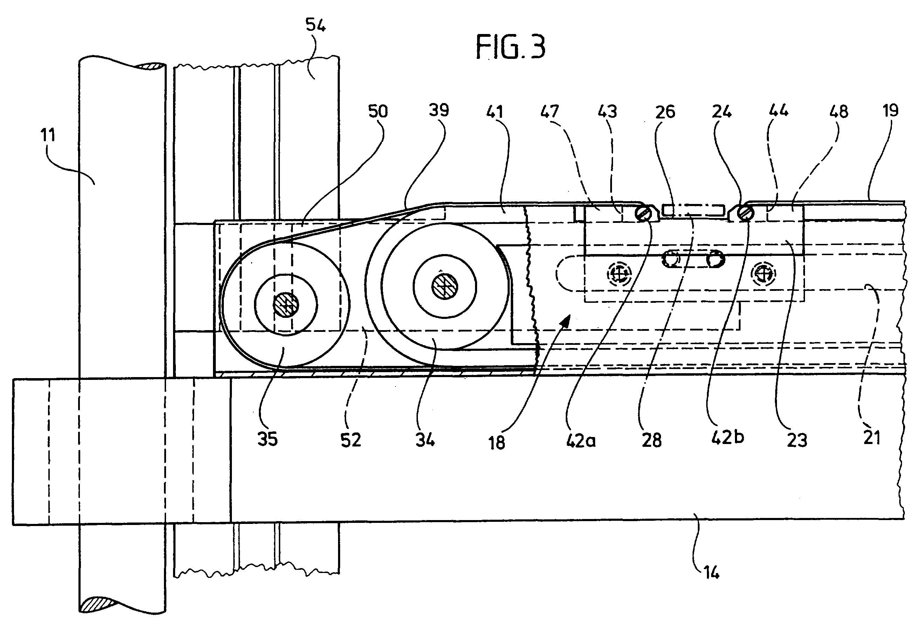

- Figur 3:: eine vergrößerte Seitenansicht auf die teilweise aufgebrochen dargestellte Schweißvorrichtung der Figur 1 im Bereich eines Umlenkrollenpaars und

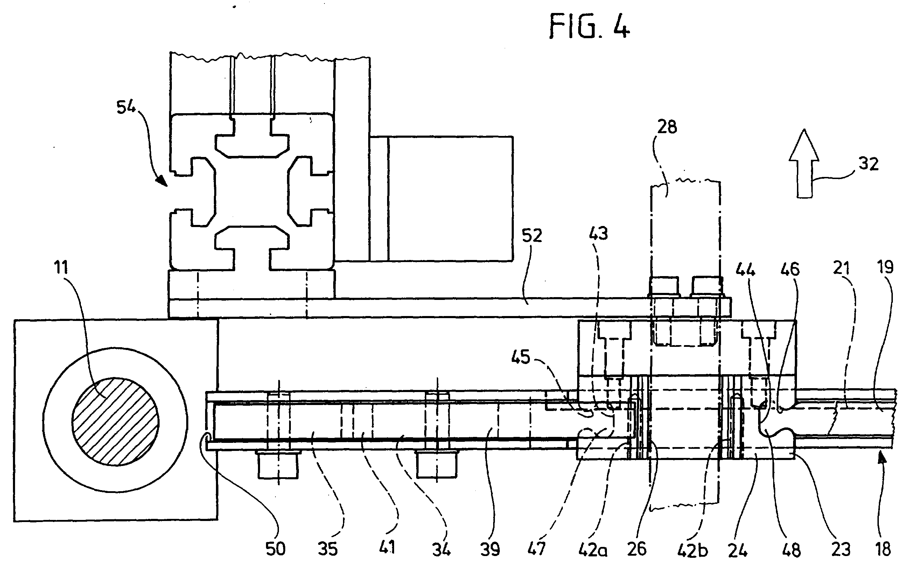

- Figur 4:: eine vergrößerte Schnittansicht entsprechend Figur 2 im Bereich des Umlenkrollenpaars der Figur 3.

In der Zeichnung ist eine Schweißvorrichtung dargestellt mit einem Gestell 10, das von zwei vertikal ausgerichteten Trägern 11 und 12 gebildet wird sowie von einer oberen Querstrebe 13 und einer unteren Querstrebe 14, die die beiden Träger 11 und 12 in ihrem oberen bzw. unteren Bereich miteinander verbinden. An den Trägern 11 und 12 ist eine parallel zu den Querstreben 13 und 14 ausgerichtete Traverse 15 in vertikaler Richtung verschieblich gehalten, an deren der unteren Querstrebe 14 zugewandten Unterseite ein Schweißstempel 16 angeordnet ist mit einem parallel zur Traverse 15 verlaufenden heizbaren Schweißdraht 17. Die beiden Träger 11 und 12 bilden eine vertikale Führung für den Schweißstempel 16, der längs der Träger 11, 12 auf- und abbewegt werden kann.

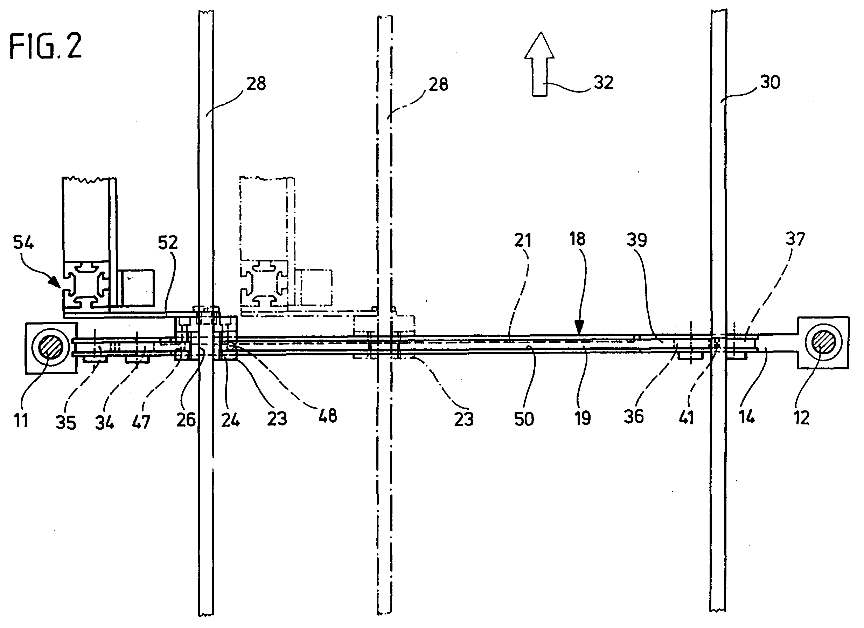

Auf der der oberen Querstrebe 13 zugewandten Oberseite der unteren Querstrebe 14 ist ein im wesentlichen quaderförmiger Gegenstempel 18 angeordnet, auf dessen dem Schweißstempel 16 zugewandte Oberseite 19 der Schweißstempel 16 aufsetzbar ist. Der Gegenstempel 18 weist eine in Längsrichtung verlaufende Führungsnut 21 auf, in der ein auf der Oberseite 19 des Gegenstempels 18 aufsitzender Schlitten 23 verschieblich gehalten ist. Der Schlitten 23 weist auf seiner dem Schweißstempel 16 zugewandten Oberseite 24 eine im Querschnitt im wesentlichen U-förmige und quer zur Längsrichtung des Gegenstempels 18 verlaufende Nut 26 auf. Die Nut 26 dient der Aufnahme eines Transportriemens 28, der zusammen mit einem Transportriemen 30, der über den dem Träger 12 benachbarten Endbereich des Gegenstempels 18 geführt ist, eine in der Zeichnung nicht dargestellte Folienbahn über den Gegenstempel 18 führt. Die beiden Transportriemen 28 und 30 definieren für die Folienbahn eine quer zum Gegenstempel 18 verlaufende und in Figur 2 mit dem Pfeil 32 symbolisierte Vorschubrichtung, in der die Folienbahn über den Gegenstempel 18 geführt wird.

In seinen dem Träger 11 bzw. 12 benachbarten Endbereichen sind am Gegenstempel 18 Umlenkrollen 34 und 35 bzw. 36 und 37 drehbar gelagert, wobei die Drehachsen der Umlenkrollen 34 bis 37 jeweils parallel zur Vorschubrichtung 32 ausgerichtet sind. Über die Umlenkrollen 35 und 37, die jeweils an einem Ende des Gegenstempels 18, dem Träger 11 bzw. 12 unmittelbar benachbart, angeordnet sind, ist ein Teflonband 39 geführt, dessen Endbereiche mittels Schrauben 42a bzw. 42b an der Oberseite 24 des Schlittens 23 fixiert sind. Ausgehend von einer ersten Seitenwand der Nut 26 verläuft das Teflonband 39 quer zur Vorschubrichtung 32 entlang der Oberseite 19 des Gegenstempels 18, wird dann von der Umlenkrolle 37 umgelenkt und an der Unterseite des Gegenstempels 18 entlanggeführt, trifft dann auf die Umlenkrolle 35, von der es wieder auf die Oberseite 19 gelenkt wird, und endet schließlich auf der Oberseite 24 des Schlittens 23 an einer zweiten Seitenwand der Nut 26.

Unterhalb des Teflonbands 39 verläuft auf der Oberseite 19 des Gegenstempels 18 ein Silikonband 41, das mit seinen Endbereichen ebenfalls auf der Oberseite des Schlittens 23 gehalten ist und um die im Abstand zu den Trägern 11 und 12 am Gegenstempel 19 drehbar gehaltenen Umlenkrollen 34 und 36 herumgeführt ist. Während die Endbereiche des Teflonbands 39 mittels der Schrauben 42a und 42b an der Oberseite 24 des Schlittens 23 fixiert sind, ist das Silikonband 41 mit seinen Endbereichen jeweils in eine Ausnehmung 43 bzw. 44 eingelegt, die zu beiden Seiten der Nut 26 in die Oberseite 24 des Schlittens 23 eingeformt sind. Die Ausnehmungen 43 und 44 sind schwalbenschwanzförmig ausgebildet und weisen bezogen auf die Längsrichtung des Gegenstempels 18 Hinterschneidungen 45 bzw. 46 auf, an denen die Endbereiche des Silikonbandes 41 mit entsprechend den schwalbenschwanzförmigen Ausnehmungen 43 und 44 ausgebildeten Vorsprüngen 47 bzw. 48 anliegen. Die schwalbenschwanzförmige Ausgestaltung der Ausnehmungen 43 und 44 und der Vorsprünge 47 bzw. 48 ermöglicht, daß das Silikonband 41 auf einfache Weise ohne zusätzliche Hilfsmittel am Schlitten 23 fixiert und gleichzeitig gespannt werden kann.

Zur Führung des Teflonbandes 39 und des Silikonbands 41 verläuft entlang der Oberseite 19 des Gegenstempels 18 eine im Querschnitt U-förmige Längsnut 50.

Die in der Zeichnung dargestellte Schweißvorrichtung bildet einen Teil einer Verpackungsmaschine, mit der Packgüter in Folienbahnen eingeschweißt werden können. Hierzu werden die Packgüter in einer in der Zeichnung nicht dargestellten Verpackungsstation jeweils von einer Folienbahn schlauchförmig umgeben, und die schlauchförmigen Folien werden anschließend zwischen den Packgütern quer zur Schlauchrichtung durch Trennschweißnähte zertrennt. Zu diesem Zweck werden die Folienbahnen mittels der Transportriemen 28 und 30 über die Oberseite 19 des Gegenstempels 18 geführt. Anschließend wird der Schweißstempel 16 auf den Gegenstempel 18 aufgesetzt und mit Hilfe des Schweißdrahtes 17 werden die Folienbahnen zertrennt und gleichzeitig verschweißt. Der in der Nut 26 des Schlittens 23 geführte Transportriemen 28 läßt sich durch Verschieben des Schlittens 23 quer zur Vorschubrichtung 32 entlang der Oberseite 19 des Gegenstempels 18 in Richtung auf den Transportriemen 30 verschieben, so daß der Abstand der beiden Transportriemen 28 und 30 auf die Breite der jeweils zum Einsatz kommenden Verpackungsfolie eingestellt werden kann. Zur Anpassung an die jeweilige Folienbreite ist der Schlitten 23 über einen Ausleger 52 mit einem profilierten Führungsholm 54 verbunden, der mittels einer in der Zeichnung nicht dargestellten Verstellmechanik der Verpackungsmaschine quer zur Vorschubrichtung 32 verstellt werden kann.

In Figur 2 ist der Schlitten 23 mit dem Transportriemen 28 und dem Führungsholm 54 in zwei verschiedenen Stellungen dargestellt. Während strichpunktiert eine ungefähr in Längsrichtung des Gegenstempels 18 mittige Position des Transportriemens 28 gezeichnet ist, nimmt der Transportriemen 28 in der in durchgezogener Linie dargestellten Position eine endseitige, dem Träger 11 benachbarte Stellung ein.

Während der Abstand der Transportriemen 28 und 30 mit Hilfe des verschieblich gelagerten Schlittens 23 praktisch über die gesamte Länge des Gegenstempels 18 verstellbar ist, bleibt die Länge des Gegenstempels 18 unveränderlich und entspricht der Länge des Schweißstempels 16, so daß dieser unabhängig vom gegenseitigen Abstand der Transportriemen 28 und 30 beim Verschweißen immer von der Oberseite 19 des Gegenstempels 18 abgedeckt wird. Dies hat eine gleichmäßige Wärmeabfuhr auf der gesamten Länge des Schweißdrahtes 17 zur Folge, so daß die Temperatur des Schweißdrahtes 17 auf einfache Weise mittels einer üblichen Steuereinheit kontrolliert werden kann. Dadurch wird eine Überbeanspruchung des Schweißdrahtes 17 verhindert; dies wiederum hat eine längere Standzeit des Schweißdrahtes zur Folge.

## Patentansprüche

1. Schweißvorrichtung für bahnenweise vorgeschobene, aufeinanderliegende Folien mit zwei in Vorschubrichtung umlaufenden, die Folienbahnen über einen Gegenstempel führenden Transportriemen, deren gegenseitiger Abstand quer zur Vorschubrichtung verstellbar ist, und mit einem auf den Gegenstempel aufsetzbaren und die darauf angeordneten Folienbahnen zwischen den beiden Transportriemen mittels eines Heizelements miteinander verschweißenden Schweißstempel,
dadurch gekennzeichnet, daß am Gegenstempel (18) eine einen Transportriemen (28) aufnehmende, relativ zum Gegenstempel quer zur Vorschubrichtung (32) verstellbare Riemendurchführung (26) angeordnet ist.

2. Vorrichtung nach Anspruch 1, dadurch gekennzeichnet, daß die Riemendurchführung (26) an einem verschieblich am Gegenstempel (18) gelagerten Schlitten (23) angeordnet ist.

3. Vorrichtung nach Anspruch 2, dadurch gekennzeichnet, daß der Schlitten (23) in einer Längsnut (21) des Gegenstempels (18) geführt ist und auf seiner dem Schweißstempel (16) zugewandten Oberseite (24) eine Ausnehmung (26) zur Durchführung eines Transportriemens (28) aufweist.

4. Vorrichtung nach Anspruch 1, 2 oder 3, dadurch gekennzeichnet, daß an der dem Schweißstempel (16) zugewandten Oberseite (19) des Gegenstempels (18) eine quer zur Vorschubrichtung (32) verschiebbare Auflage (39, 40) angeordnet ist mit einer Durchbrechung zur Aufnahme der Riemendurchführung (26).

5. Vorrichtung nach Anspruch 4, dadurch gekennzeichnet, daß die Auflage als ein über drehbar am Gegenstempel (18) gelagerte Umlenkrollen (34, 37; 35; 36) geführtes Auflageband (39, 41) ausgestaltet ist.

6. Vorrichtung nach Anspruch 4 oder 5, dadurch gekennzeichnet, daß die Auflage (39, 41) an der Oberseite (19) des Gegenstempels (18) in einer Führungsnut (50) geführt ist.

7. Vorrichtung nach Anspruch 4, 5 oder 6, dadurch gekennzeichnet, daß die Auflage ein Silikonband (41) umfaßt.

8. Vorrichtung nach Anspruch 7, dadurch gekennzeichnet, daß das Silikonband (41) am Schlitten (23) einspannbar ist.

9. Vorrichtung nach einem der Ansprüche 4 bis 8, dadurch gekennzeichnet, daß die Auflage ein Teflonband (39) aufweist.

10. Vorrichtung nach Anspruch 9, dadurch gekennzeichnet, daß das Silikonband (41) und das Teflonband (39) jeweils über separate Umlenkrollen (34, 36; 35, 37) geführt sind.

11. Vorrichtung nach Anspruch 10, dadurch gekennzeichnet, daß mindestens eine Umlenkrolle (37) des Teflonbands (39) verstellbar am Gegenstempel (18) gehalten ist.
